# EUROPÄISCHE PATENTANMELDUNG

(11) **EP 2 607 306 A1**
(43) Veröffentlichungstag der Anmeldung: **26.06.2013**
(21) Anmeldenummer: 11195638.9
(22) Anmeldetag: 23.12.2011
(51) Int. Cl.: C01B 25/455, C01D 15/00

(54) **LiPF6-Lösungen**

(71) Anmelder: LANXESS Deutschland GmbH, 51369 Leverkusen (DE)
(72) Erfinder: BOLL, Matthias, 51061 Köln (DE); EBENBECK, Wolfgang, 51373 Leverkusen (DE); KUCKERT, Eberhard, 51375 Leverkusen (DE)

(57) **Zusammenfassung**

Die vorliegende Erfindung betrifft korrosionsarme, halogenidarme LiPF₆-Lösungen sowie deren Verwendung in elektrochemischen Speichervorrichtungen und ein Verfahren zur Herstellung derselben.

## Beschreibung

Die vorliegende Erfindung betrifft LiPF₆-Lösungen sowie deren Verwendung in elektrochemischen Speichervorrichtungen und ein Verfahren zur Herstellung derselben.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien hat in den letzten Jahren weltweit dramatisch zugenommen. Hinzu kommt die Ausrüstung von Elektrofahrzeugen mit derartigen Batterien.

Angesichts dieses sprunghaft gestiegenen Bedarfs nach Batterien und den damit verbundenen ökologischen Problemen kommt der Entwicklung von wieder aufladbaren Batterien mit einer langen Lebensdauer eine stetig wachsende Bedeutung zu.

Seit den frühen neunziger Jahren werden wieder aufladbare Lithiumionenbatterien (eigentlich: Lithiumionenakkumulatoren) kommerziell angeboten. Die meisten dieser Akkumulatoren arbeiten mit Lithiumhexafluorophosphat als Leitsalz. Dieses Lithiumsalz stellt jedoch eine extrem hydrolyseempfmdliche Verbindung mit einer geringen thermischen Stabilität dar, so dass die entsprechenden Lithiumionenakkumulatoren aufgrund dieser Eigenschaften des Salzes nur durch sehr aufwändige und somit auch sehr kostenintensive Verfahren hergestellt werden können. Die entstehenden Hydrolyseprodukte des Lithiumhexafluorophosphat, wie etwa freies Fluorid, zeigen vor allem in Gegenwart von Wasser eine hohe Korrosivität gegenüber einigen im Akkumulator enthaltenen Bauteilen wie etwa der Anode und der Kathode.

Diese Empfindlichkeit gegen Wasser und die daraus entstehenden Zersetzungsprodukte mindern die Lebensdauer sowie die Leistung von Lithiumionenakkumulatoren und beeinträchtigen auch deren Einsatz unter extremen Bedingungen, wie z.B. hohen Temperaturen.

Stellt man LiPF₆ her, fällt dieses in heute gängigen großtechnischen Prozessen zwangsläufig zusätzlich zusammen mit Halogeniden, insbesondere Fluoriden an, die bzw. das sich störend im Hinblick auf die Effizienz und Lebensdauer einer elektrochemischen Speichervorrichtung auswirken können bzw. kann.

Daher werden in der Literatur verschiedene Lösungsvorschläge für die Verringerung des HF-Gehaltes, respektive Fluorid-Gehaltes in LiPF₆ angeboten.

In CN 102009972A werden HF-Anteile aus einem LiPF₆-Kristallisat mittels eines Stickstoffstroms entfernt.

In JP 09-268 005 wird reaktionsbedingt entstandenes HF durch Entgasen der erhaltenen LIPF₆ - Lösung unter Kühlung entfernt.

DE 198 05 356 C1 beschreibt die Herstellung von reinem LiPF₆ aus LiF und PCI₅ in Diethylether, bei dem eine Suspension von LiF in Diethylether angesäuert und anschließend mit PCI₅ umgesetzt wird. Diese Mischung wird nach erfolgter Umsetzung neutralisiert, filtriert und entweder zur Trockene eingedampft, oder LiPF₆ wird mit Hilfe eines Kristallisationshilfsmittels auskristallisiert.

Anfallendes LiPF₆-Etherat wird dann in Methylcyclohexan gelöst und unter einem Druck von 800 mbar eingeengt. Man erhielt ein Kristallisat mit einem Chloridgehalt von 70 ppm. In weiteren Versuchen erzielte man Chloridgehalte von 20 ppm.

Nachteilig an dem oben zitierten Stand der Technik ist die Tatsache, dass entweder der Halogenid-Gehalt, insbesondere der Fluoridgehalt nicht niedrig genug war oder mit Chlorid sogar zusätzliche unerwünschte Halogenide prozessbedingt eingeführt wurden, was die Korrosivität von LiPF₆-Lösungen und damit zu befüllender elektrochemischer Speichervorrichtungen negativ beeinflusst.

Desweiteren wird zum Beispiel in WO02/28500 A1 vorgeschlagen, die LiPF6-haltige Lösung mit einem Alkalimetallhydrid zur Entfernung von Wasser und anderen protischen Verunreinigungen reagieren zu lassen. Nachteilig ist hierbei, daß das vorgeschlagene LiH schwer handhabbar und vergleichsweise teuer ist, vor allem aber, daß die Reaktionszeiten sehr lang sind. Das ebenfalls vorgeschlagene NaH reagiert zwar sehr schnell, aber hat den großen Nachteil, das hiermit Natriumionen in die Lösung gegeben werden, die den späteren Einsatz des LiPF6-Lösung stören können. Durch eine Verunreinigung von LiPF₆-Lösungen mit weiteren Metallen können die elektrochemischen Prozesse in der Zelle einer elektrochemischen Speichervorrichtung, insbesondere durch Ausbildung von Solid Elektrolyte Interphase(s) (SEI), ungünstig beeinflußt werden, beziehungsweise unerwünschte Redoxprozesse einsetzen.

Die Aufgabe der vorliegenden Erfindung bestand daher in der Bereitstellung nicht-korrosiver halogenidarmer und wasserarmer LiPF₆-Lösungen in organischen Lösungsmitteln zwecks Einsatz in elektrochemischen Speichervorrichtungen, ohne die Lösungen während der Neutralisation durch fremde Alkalimetalle, abgesehen des durch das Herstellungsverfahren zwangsläufig vorliegenden Lithiums, zu verunreinigen.

Die Lösung der Aufgabe und somit Gegenstand der vorliegenden Erfindung ist die Herstellung einer nicht-korrosiven / korrosionsarmen, halogenidarmen sowie wasserfreien LiPF₆-Lösung, erhältlich durch Behandlung einer nichtwässrigen, halogenidhaltigen LiPF₆-Lösung mit wenigstens Calciumhydrid oder Calciummetall als Additiv, wobei das LiPF₆ in wenigstens einem Lösungsmittel aus der Reihe der organischen Nitrile oder der organischen Carbonate gelöst ist.

Calciumhydrid wird in der Technik breit eingesetzt, ist vergleichsweise günstig und im Vergleich zu anderen Metallhydriden - vor allem Alkalimetallhydriden - einfacher zu handhaben, da reaktionsträger.

Überraschenderweise gelingt es, LiPF₆-Lösungen in besagten Lösungsmitteln mit einem Gehalt an Wasser von weniger als 20 ppm und einem Gesamtgehalt an Fluorid von weniger als 4000 ppm herzustellen, deren Korrosionswirkung in einem Lithiumionenakkumulator auch über einen längeren Zeitraum hinweg vernachlässigbar ist. Des weiteren wurde überraschend gefunden, daß der Einsatz von Calciumhydrid zu keiner Verunreinigung der Lösung mit Calcium-Ionen führt

Zur Klarstellung sei angemerkt, dass im Rahmen der vorliegenden Erfindung mit "Gehalt an Fluorid" der Gehalt gelöster Fluorid-Ionen als auch als LiF gebundenes Fluorid bezeichnet wird. Entsprechend bedeutet "halogenidarm" im Sinne der vorliegenden Erfindung, dass der Gehalt gelöster und/oder ungelöster Fluorid-Ionen in der LiPF₆-Lösung kleiner 4000 ppm ist. Wasserfrei im Sinne der vorliegenden Erfindung bedeutet einen Wassergehalt von 100ppm. Nicht-korrosiv im Sinne der vorliegenden Erfindung bedeutet, daß die Lösung einen Wassergehalt von 100ppm und gleichzeitig einen Gesamtfluoridgehalt von < 4000ppm aufweist. Dem Fachmann ist bekannt, daß die Kombination aus Wasser und Halogenid zu Korrosionserscheinungen an Metallen - in elektrochemischen Speichervorrichtungen vor allem an der Kathode und der Anode des Speichermoduls - führt. Ferner sei zur Klarstellung angemerkt, dass alle nachfolgend aufgeführten, allgemeinen oder in Vorzugsbereichen genannten Definitionen und Parameter in beliebigen Kombinationen umfasst sind.

Erfindungsgemäß als Lösungsmittel bevorzugt einzusetzendes organisches Nitril ist Acetonitril. Erfindungsgemäß als Lösungsmittel bevorzugt einzusetzende organische Carbonate sind Dimethylcarbonat und Diethylcarbonat, besonders bevorzugt Dimethylcarbonat.

Die vorliegende Erfindung betrifft deshalb besonders bevorzugt korrosionsarme LiPF₆-Lösungen in Acetonitril, dadurch gekennzeichnet, dass zur Entfernung von Halogenid wenigstens Calciumhydrid oder Calciummetall als Additiv, bevorzugt Calciumhydrid eingesetzt wird.

Die vorliegende Erfindung betrifft aber auch besonders bevorzugt korrosionsarme LiPF₆-Lösungen in Dimethylcarbonat, dadurch gekennzeichnet, dass zur Entfernung von Halogenid wenigstens Calciumhydrid oder Calciummetall als Additiv, bevorzugt Calciumhydrid eingesetzt wird.

Die erfindungsgemäße Behandlung erfolgt in der Weise, dass zu einer Lösung von LiPF₆ in wenigstens einem der genannten Lösungsmittel das Additiv zugegeben wird und man das Additiv über einen Zeitraum von bevorzugt einer halben Stunde bis 72 Stunden, besonders bevorzugt von einer Stunde bis 30 Stunden bei einer Temperatur von bevorzugt 10 bis 80°C, besonders bevorzugt von 20 bis 40°C auf die Lösung einwirken lässt. Dieser Verfahrensschritt wird auch als Neutralisation bezeichnet. Danach wird vorhandener ungelöster Feststoff abgetrennt und man erhält die korrosionsarme und halogenidarme Lösung von LiPF₆. Der erfindungsgemäß zweite Schritt ist die Feststoffabtrennung, die bevorzugt mittels Filtration, Sedimentation, Zentrifugation oder Flotation, besonders bevorzugt mittels Filtration, ganz besonders bevorzugt mittels Filtration über einen Filter mit einer mittleren Porenweite von 200 nm oder kleiner, durchgeführt wird.

Die vorliegende Erfindung betrifft daher auch ein Verfahren zur Herstellung korrosionsarmer Lösungen von LiPF₆, dadurch gekennzeichnet, dass man als Neutralisationsschritt auf diese Lösungen von LiPF₆ wenigstens Calciumhydrid oder Calciummetall als Additiv einwirken läßt und danach im zweiten Schritt die unlöslichen Komponenten abtrennt, wobei das LiPF₆ in wenigstens einem Lösungsmittel aus der Reihe der organischen Nitrile oder der organischen Carbonate gelöst ist.

Die vorliegende Erfindung betrifft bevorzugt ein Verfahren zur Herstellung korrosionsarmer Lösungen von LiPF₆, besonders bevorzugt durch Entfernung von Halogeniden, ganz besonders bevorzugt von Fluorid-Ionen, insbesondere bevorzugt von Fluorid-Ionen die als HF-gebundenes Fluorid und/oder LiF-gebundenes Fluorid vorliegen, aus Lösungen von LiPF₆, dadurch gekennzeichnet, dass man in einem Neutralisationsschritt auf diese Lösungen von LiPF₆ wenigstens Calciumhydrid oder Calciummetall als Additiv einwirken läßt und danach in einem zweiten Schritt die unlöslichen Komponenten abtrennt, wobei das LiPF₆ in wenigstens einem Lösungsmittel aus der Reihe der organischen Nitrile oder der organischen Carbonate gelöst ist. In einer bevorzugten Ausführungsform läßt man während des Neutralisationsschrittes Calciumhydrid oder Calciummetall als alleiniges Additiv auf die Lösungen von LiPF₆ einwirken.

In einer bevorzugten Ausführungsform wird dem erfindungsgemäßen Verfahren ein Entgasungsverfahren nachgestellt. Bevorzugt zu entfernendes Gas ist Wasserstoff.

In einer bevorzugten Ausführungsform werden die erfindungsgemäß einzusetzenden Lösungsmittel vor dem Einsatz als LiPF₆-Lösungsmittel getrocknet.

Beispielhafte Trockenschritte werden in der WO 02/28500 A1 beschrieben. Bevorzugte dem erfindungsgemäßen Verfahren vorauszuschickende Trocknungsverfahren für die einzusetzenden Lösungsmittel allein ist wenigstens eines der Reihe
- das Inkontaktbringen des Lösungsmittels/Flüssigelektrolyten mit wenigstens einem Alkalimetallhydrid,
- das Inkontaktbringen des Lösungsmittels mit Aluminiumoxid, Siliziumdioxid oder Calciumoxid,
- das Mischen mit einem Lösungsmittel das niedrigsiedende Azeotrope mit Wasser bildet und die sich anschließende destillative Entfernung des Wassers/Lösungsmittelazeotrops gemäß JP 02087473,
- der Einsatz inerter fluorierter Flüssigkeiten, bevorzugt C₈F₁₈ als Schlepper gemäß WO 00/38813 A1,
- das Durchblasen von trockenen Inertgasen gemäß JP 103 38 653,
- das Absorbieren von Wasser an speziell vorbehandeltem Aluminiumoxid oder natürlichen oder synthetischen Aluminiumsilikaten gemäß JP 11 054 378, JP 11 008 163 oder gemäß DE 19 827 63 1,
- das Inkontaktbringen der LiPF₆-Lösung mit aminhaltigen polymerfixierten Reinigungsmitteln gemäß DE 19 827 630 oder
- das Trocknen mit Alkalimetallen gemäß F.P.Dousek et. al. (Chem. Listy (1973), 67 (4) 427-32) oder JP 011 22 566.

Bevorzugt werden als natürliche oder synthetische Aluminiumsilikate Molekularsiebe eingesetzt.

Erfindungsgemäß zur Trocknung bevorzugt einzusetzende Molekularsiebe bestehen aus Zeolithen.

Zeolithe sind kristalline Aluminiumsilikate, die in zahlreichen Modifikationen in der Natur vorkommen, aber auch synthetisch hergestellt werden können. Mehr als 150 verschiedene Zeolithe sind synthetisiert worden, 48 natürlich vorkommende Zeolithe sind bekannt. Die natürlichen Zeolithe werden mineralogisch unter dem Begriff Zeolithgruppe zusammengefasst.

Die Zusammensetzung der Stoffgruppe Zeolithe ist:

Mⁿ⁺ _{x/n} [(AlO₂)⁻ₓ (SiO₂)_{y}]· zH₂O

- Der Faktor **n** ist die Ladung des Kations M und beträgt bevorzugt 1 oder 2.
- **M** ist bevorzugt ein Kation eines Alkali- oder Erdalkalimetalls. Diese Kationen werden zum elektrischen Ladungsausgleich der negativ geladenen Aluminium-Tertraeder benötigt und nicht in das Haupt-Gitter des Kristalls eingebaut, sondern halten sich in Hohlräumen des Gitters auf- und sind daher auch leicht innerhalb des Gitters beweglich und auch im Nachhinein austauschbar.
- Der Faktor z gibt an, wie viele Wassermoleküle vom Kristall aufgenommen wurden. Zeolithe können Wasser und andere niedermolekulare Stoffe aufnehmen und beim Erhitzen wieder abgeben, ohne dass ihre Kristallstruktur dabei zerstört wird.
- Das molare Verhältnis von SiO₂ zu AlO₂ bzw. **y/x** in der Summenformel wird als **Modul** bezeichnet. Es kann aufgrund der Löwenstein-Regel nicht kleiner als 1 werden.

Erfindungsgemäß bevorzugt als Molekülsieb einzusetzende synthetische Zeolithe sind:

| **Zeolith** | **Zusammensetzung der Elementarzelle** |
|---|---|
| Zeolith A | Na_{12[}(AlO₂)ᵢ₂(SiO₂)₁₂]·27 H₂O |
| Zeolith X | Na₈₆[(AlO₂)₈₆(SiO₂)₁₀₆]·264 H₂O |
| Zeolith Y | Na₅₆[(AlO₂)₈₆(SiO₂)₁₃₆]·250 H₂O |
| Zeolith L | K₉[(AlO₂)₉(SiO₂)₂₇]·22 H₂O |
| Mordenit | Na_{8,7}[(AlO₂)₈₆(SiO₂)_{39,3}]·24 H₂O |
| ZSM 5 | Na_{0,3}H_{3,8}[AlO₂)_{4,1}(SiO₂)_{91,9}] |
| ZSM 11 | Na_{0,1}H_{1,7}[AlO₂)_{1,8}(SiO₂)_{94,2}] |

In einer alternativ bevorzugten Ausführungsform wird der Trocknungsschritt dem erfindungsgemäßen Verfahren nachgestellt oder gleichzeitig mit dem erfindungsgemäßen Verfahren zur Abtrennung von Halogeniden angewandt. Bevorzugte Trocknungsmittel sind in diesem Fall P₂O₅, natürliche oder synthetische Aluminiumsilikate.

In einer bevorzugten Ausführungsform wird die Oberfläche des Calciumhydrids bzw. des Calciummetalles während seines Einsatzes als Additiv also während des Neutralisationsschrittes durch geeignete Hilfsmittel aktiv gehalten, um eine eventuelle, an der Oberfläche stattfindende, Inaktivierung durch Anlagerung von Calciumfluorid zu verhindern. Bevorzugte Hilfsmittel sind hierzu Ultraschallgeräte, Ultraturax oder Strahldispergatoren. Dem Fachmann sind darüber hinaus ggf. weitere Hilfsmittel zu diesem Zweck bekannt.

In einer bevorzugten Ausführungsform wird dem erfindungsgemäßen Verfahren ein Entgasungsverfahren nachgestellt. Bevorzugt zu entfernende Gase sind H₂, CO₂ oder SiF₄.

In einer bevorzugten Ausführungsform schließt sich an das erfindungsgemäße Verfahren eine Feststoffabtrennung, bevorzugt mit einem Filter an, um das oder die Additive zur Abtrennung von Halogeniden und/oder Trocknung und/oder deren unlösliche Reaktionsprodukte aus der erfindungsgemäßen Lösung von LiPF₆ zu entfernen.

Die erfindungsgemäßen LiPF₆-Lösungen werden bevorzugt in elektrochemischen Speichervorrichtungen, bevorzugt in Akkumulatoren oder Superkondensatoren, eingesetzt.

Die vorliegende Erfindung betrifft deshalb auch die Verwendung der erfindungsgemäßen LiPF₆-Lösungen in elektrochemischen Speichervorrichtungen bzw. elektrochemische Speichervorrichtungen enthaltend LiPF₆-Lösungen, die durch die oben beschriebene Behandlung mit Calciumhydrid oder Calciummetall von Halogenid, bevorzugt von Wasser und Halogenid, befreit wurden.

Die vorliegende Erfindung betrifft aber auch ein Verfahren zur Verbesserung der Langzeitstabilität elektrochemischer Speichervorrichtungen, bevorzugt der zu diesem Zweck einzusetzenden korrosionsarmen LiPF₆-Lösungen, dadurch gekennzeichnet, dass man diese Lösungen einer Neutralisation und einer Feststoffabtrennung unterzieht, wobei die Neutralisation die Zugabe von wenigstens Calciumhydrid oder Calciummetall als Additiv zu einer Lösung des LiPF₆ in wenigstens einem Lösungsmittel aus der Reihe der organischen Nitrile oder der organischen Carbonate bedeutet und eine anschließende Feststoffabtrennung erfolgt, um das Additiv und/oder sonstige als Feststoff vorliegende Substanzen, bevorzugt nicht umgesetztes Calciumhydrid oder Calciummetall und Calciumfluorid als Reaktionsprodukt zu entfernen.

### Beispiele

Bei allen %-Angaben handelt es sich um Gewichts-%.

Die beschriebenen Beispiele wurden, soweit nicht anders beschrieben, in einer Atmosphäre aus Argon mit einem Gehalt von < 0,1 ppm Wasser und < 0,1 ppm Sauerstoff durchgeführt.

Gemessen wurde die Konzentration des Hexafluorosphosphats und des Fluorids mit einem Ionenchromatograph mit folgenden Parametern:
Gerätetyp: Dionex ICS 2100

| | | |
|---|---|---|
| Säule: | | IonPac® AS20 2*250-mm "Analytical Column with guard" |
| Probenvolumen: | 1 µl | |
| Eluent: | | KOH Gradient: 0 min/15 mM, 10 min/15 mM, 13 min/80 mM, 27 min/100 mM, 27.1 min/15 mM, 34 min/15 mM |
| Eluent Fließrate: | | 0,25 ml/min |
| Temperatur: | | 30°C |
| Self-Regenerating Suppressor: | | ASRS® 300 (2-mm) |

Gemessen wurde die Konzentration der Kationen mit einem Ionenchromatograph mit folgenden Parametern:

| | | |
|---|---|---|
| Gerätetyp: Dionex ICS 2100 | | |
| Säule: | | IonPac CS16 3*250-mm "Analytical Column with guard" |
| Probenvolumen: | 1 µl | |
| Eluent: | | 36 mM Methansulfonsäure isocratisch, also die Zusammensetzung des Laufmittels wird während der Trennung konstant gehalten |
| Eluent Fließrate: | | 0,5 ml/min |
| Temperatur: | | 60°C |
| Self-Regenerating Suppressor: | | CSRS® 300 (2-mm) |

Wassergehalte wurden bestimmt über Coulometrische Titration nach dem Karl-Fischer-Verfahren auf einem Gerät der Firma Metrohm, Typ Titrando® 851 Coulometer nach Standardverfahren. Die Vorteile sowie die Durchführung, die anzuwendende Norm und für die Bestimmung zu verwendende Apparate werden beispielsweise beschrieben in P.Bruttel, R.Schlink, "Wasserbestimmung durch Karl-Fischer-Titration", Metrohm Monographie 8.026.5001, 2003-06. ASRS® 300 und CSRSO 300 stammen von Dionex Corporation (siehe Dionex Corp., Doc. No.031956-05, August 2007). IonPac® AS20 ist eine Hydroxid-selektive Austauscher-Säule der Dionex Corporation.

### Reduktion des freien Fluoridwertes durch Neutralisation:

### Beispiel 1:

Zu 10,29 g einer, über einen 200 nm Spritzenfilter filtrierten Lösung von 34,27 % LiPF₆ in über Molekularsieb getrocknetem Dimethylcarbonat mit einem freien Fluorid-Gehalt von 0,97 % wurden 239,7 mg CaH₂ in kleinen Portionen zugegeben. Nach ca. 15 Stunden wurde eine Probe der Lösung entnommen, über einen Spritzenfilter mit einer Porenweite von 200 nm filtriert und analysiert. Der Gehalt der Lösung an Fluorid betrug nur noch 0,64 Gew.-%. Durch weitere Zugabe von 271,8 mg CaH₂ und weitere ca. 15 Stunden später betrug der Fluorid-Gehalt einer wie oben filtrierten Lösung nur noch 0,36 %. Der Calciumgehalt dieser Lösung lag bei 63 ppm. Der Wassergehalt der Lösung lag bei 22,5 ppm.

### Beispiel 2:

Zu 10 g einer, über einen 200 nm Spritzenfilter filtrierten Lösung von 14,81 % LiPF₆ in über Molekularsieb getrocknetem Acetonitril mit einem freien Fluorid-Gehalt von 0,50 % wurden 200 mg Calciumhydrid gegeben. Nach 26 Tagen wurde eine Probe der Lösung entnommen, über einen Spritzenfilter mit einer Porenweite von 200 nm filtriert und analysiert. Der Fluorid-Gehalt der Lösung betrug nur noch 0,24 Gew.-%. Der Calciumgehalt dieser Lösung lag bei 20ppm. Der Wassergehalt der Lösung lag bei 56 ppm.

## Patentansprüche

**1.** LiPF₆-Lösungen erhältlich durch Behandlung einer nichtwässrigen, halogenidhaltigen LiPF₆-Lösung mit wenigstens Calciumhydrid oder Calciummetall als Additiv, wobei das LiPF₆ in wenigstens einem Lösungsmittel aus der Reihe der organischen Nitrile oder der organischen Carbonate gelöst ist.

**2.** LiPF₆-Lösungen gemäß Anspruch 1, **dadurch gekennzeichnet, dass** als organisches Nitril Acetonitril eingesetzt wird.

**3.** LiPF₆-Lösungen gemäß Anspruch 1, **dadurch gekennzeichnet, dass** als organisches Carbonat Dimethylcarbonat oder Diethylcarbonat, bevorzugt Dimethylcarbonat eingesetzt wird.

**4.** LiPF₆-Lösungen gemäß Ansprüche 1 oder 2, **dadurch gekennzeichnet, dass** das LiPF₆ in Acetonitril vorliegt und zur Entfernung von Halogenid wenigstens Calciumhydrid oder Calciummetall als Additiv eingesetzt wird.

**5.** LiPF₆-Lösungen gemäß der Ansprüche 1 oder 3, **dadurch gekennzeichnet, dass** das LiPF₆ in Dimethylcarbonat oder Diethylcarbonat vorliegt und zur Entfernung von Halogenid wenigstens Calciumhydrid oder Calciummetall als Additiv eingesetzt wird.

**6.** LiPF₆-Lösungen gemäß der Ansprüche 1 bis 5, **dadurch gekennzeichnet, dass** das oder die einzusetzende(n) Lösungsmittel vor dem Einsatz als LiPF₆-Lösungsmittel getrocknet wurde(n).

**7.** LiPF₆-Lösungen gemäß Anspruch 6, **dadurch gekennzeichnet, dass** als Trocknungsverfahren wenigstens eines der Reihe
- das Inkontaktbringen des Lösungsmittels/Flüssig-elektrolyten mit wenigstens einem Alkalimetallhydrid,
- das Inkontaktbringen des Lösungsmittels mit Aluminiumoxid, Siliziumdioxid oder Calciumoxid,
- das Mischen mit einem Lösungsmittel das niedrigsiedende Azeotrope mit Wasser bildet und die sich anschließende destillative Entfernung des Wassers/Lösungsmittelazeotrops,
- der Einsatz inerter fluorierter Flüssigkeiten, bevorzugt C₈F₁₈ als Schlepper,
- das Durchblasen von trockenen Inertgasen,
- das Absorbieren von Wasser an speziell vorbehandeltem Aluminiumoxid oder natürlichen oder synthetischen Aluminiumsilikaten,
- das Inkontaktbringen der LiPF₆-Lösung mit aminhaltigen polymerfixierten Reinigungsmitteln oder
- das Trocknen mit Alkalimetallen
durchgeführt wird.

**8.** LiPF₆-Lösungen gemäß Anspruch 7, **dadurch gekennzeichnet, dass** als natürliche oder synthetische Aluminiumsilikate Molekularsiebe eingesetzt werden.

**9.** Verfahren zur Herstellung korrosionsarmer Lösungen von LiPF₆, **dadurch gekennzeichnet, dass** man als Neutralisationsschritt auf diese Lösungen von LiPF₆ wenigstens Calciumhydrid oder Calciummetall als Additiv einwirken läßt und danach in einem zweiten Schritt die unlöslichen Komponenten abtrennt, wobei das LiPF₆ in wenigstens einem Lösungsmittel aus der Reihe der organischen Nitrile oder der organischen Carbonate gelöst ist.

**10.** Verfahren gemäß Anspruch 9, **dadurch gekennzeichnet, dass** dieses zur Entfernung von Halogeniden, bevorzugt von Fluorid-Ionen, eingesetzt wird.

**11.** Verfahren gemäß der Ansprüche 9 oder 10, **dadurch gekennzeichnet, dass** das oder die einzusetzende(n) Lösungsmittel zuvor getrocknet wurde(n) und als Trocknungsverfahren wenigstens eines der Reihe
- das Inkontaktbringen des Lösungsmittels/Flüssig-elektrolyten mit wenigstens einem Alkalimetallhydrid,
- das Mischen mit einem Lösungsmittel das niedrigsiedende Azeotrope mit Wasser bildet und die sich anschließende destillative Entfernung des Wassers/Lösungsmittelazeotrops,
- der Einsatz inerter fluorierter Flüssigkeiten, bevorzugt C₈F₁₈ als Schlepper,
- das Durchblasen von trockenen Inertgasen,
- das Absorbieren von Wasser an speziell vorbehandeltem Aluminiumoxid oder natürlichen oder synthetischen Aluminiumsilikaten,
- das Inkontaktbringen der LiPF₆-Lösung mit aminhaltigen polymerfixierten Reinigungsmitteln oder
- das Trocknen mit Alkalimetallen durchgeführt wird.

**14.** Verwendung von wenigstens Calciumhydrid oder Calciummetall als Additiv zur Herstellung nicht-korrosiver Lösungen von LiPF₆, wobei dieses in wenigstens einem Lösungsmittel der Reihe der organischen Carbonate oder organischen Nitrile gelöst ist.

**15.** Verwendung der LiPF₆-Lösungen gemäß der Ansprüche 1 bis 8 in elektrochemischen Speichervorrichtungen.

**16.** Verfahren zur Verringerung der Korrosivität der Lösungen in elektrochemischen Speichervorrichtungen, bevorzugt der zu diesem Zweck einzusetzenden LiPF₆-Lösungen, **dadurch gekennzeichnet, dass** man diese Lösungen einer Neutralisation und einer Feststoffabtrennung unterzieht, wobei die Neutralisation die Zugabe von wenigstens Calciumhydrid oder Calciummetall als Additiv zu einer Lösung des LiPF₆ in wenigstens einem Lösungsmittel aus der Reihe der organischen Nitrile oder der organischen Carbonate bedeutet und die anschließende Feststoffabtrennung mittels Filtration, Sedimentation, Zentrifugation oder Flotation, bevorzugt mittels Filtration, erfolgt, um das Additiv und/oder sonstige als Feststoff vorliegende Substanzen, bevorzugt Calciumfluorid und überschüssiges Calciumhydrid oder Calciummetall zu entfernen.
